# EUROPEAN PATENT SPECIFICATION

(11) **EP 2 196 099 B1**
(45) Date of publication and mention of the grant of the patent: **24.08.2011**
(21) Application number: 09176895.2
(22) Date of filing: 24.11.2009
(51) Int. Cl.: A23L 1/29, A23L 1/30, A23L 1/305, A61K 31/195, A61K 31/202

(54) **Immuno-nutritional composition**
Immunostimulierende Nahrungsmittel
Compostions immunonutritionnelles

(30) Priority: 12.12.2008 IT MI20082201
(43) Date of publication of application: 16.06.2010
(73) Proprietor: Marzullo, Andrea, 18100 Imperia (IT)
(72) Inventor: Marzullo, Andrea, 18100 Imperia (IT)
(74) Representative: Martegani, Franco

(56) References cited:
- WO-A1-01/56406
- WO-A1-99/58000
- WO-A1-2004/026294
- DE-U1-202007 011 252
- US-A- 5 733 884
- US-A1- 2006 083 824
- ANONYMOUS: "Cubitan" INTERNET ARTICLE, [Online] 2007, XP002538252 Retrieved from the Internet: URL:http://www.nutriciaclinical.co.nz/docu mentlibrary/cubitan_fact_sheet.pdf> [retrieved on 2009-07-22]

## Description

The present invention relates to an immuno-nutritional composition, in particular an immuno-nutritional composition for the treatment of lesions, in particular pressure lesions.

The present invention falls within the technical field of food products which can be used for medical purposes and can be inserted within food products destined for special medical purposes (Foods for Special Medical Purposes - FSMP) and, in particular, food products destined for the nutritional and immune support of patients affected by lesions, wounds or sores, such as pressure lesions (PLs).

Pressure lesions, also known as decubitus lesions or ulcers, represent an important health problem which interests people compelled to spend long periods of time in bed, such as those who have undergone surgical interventions or elderly or in any case immobilized people.

Pressure lesions are generated as a result of the prolonged pressure of the body weight on the bed or by the stretching and/or rubbing of the skin tissues against the surface of the bed. It is specifically due to immobility that said pressure or rubbing always interests the same areas of the body which are in direct contact with the bed.

It has been recognized that nutrition has a fundamental role in both the prevention and treatment of pressure lesions. In particular, it has been observed that subjects affected by PLs generally have a condition of malnutrition which favours the loss of elasticity of the skin and consequently the formation of pressure lesions.

Proteins and carbohydrates are essential substances for the treatment of these lesions and the supply of these substances should be guaranteed above all by an adequate diet. To integrate the food diet, the use of additional nutritional compositions is also now consolidated, which integrate this supply taken with the diet with various kinds of immuno-nutrient substances.

Nutritional compositions mainly containing proteins, carbohydrates and immuno-nutrients such as arginine, fatty acids, ribonucleic acid (RNA), vitamins and zinc, are known in the state of the art and available on the market. These products are normally administered to subjects affected by PLs in the form of drinks (generally packaged in "briks" of 200-250 ml) or in solutions which can be administered enterally. The total quantity of nutritional compositions taken daily varies from subject to subject. The average dosage corresponds to approximately 600-850 ml/day of solution and/or drink.

The use of the above nutritional compositions, however, creates various problems. A first problem is represented by the undesired effects that the substances contained in these compositions can induce when administered to patients affected by PLs, who have other pathologies, such as for example diabetes, nephropathies, obesity, dysphagia, malabsorption syndromes, etc. The high protein content of the nutritional compositions according to the state of the art, for example, make their use contraindicated in patients affected by nephropathies. The high calory and carbohydrate content, on the other hand, makes the use of the nutritional compositions according to the state of the art unadvisable in the case of obese patients. Analogously, the administration of nutritional compositions commercially available is often incompatible with pathologies such as diabetes due to the high glucide content.

A second problem is linked to the administration mode of the nutritional compositions according to the state of the art. Subjects affected by pathologies such as dysphagia (difficulty in swallowing) or malabsorption syndrome (reduction in the absorption capacity of substances on the part of the intestine) are not able to easily take food substances in the form of a drink and consequently the beneficial effects obtained in the treatment of PLs are extremely limited.

A third drawback is represented by the fact that the nutritional compositions are commercially available in pre-packaged dosages, containing fixed quantities of the various ingredients. This has the disadvantage of greatly limiting the possibility of varying the nutritional contribution administered in relation to the specific demands of each patient. When fractions of the contents of a packaging are to be used, for compensating the limited scalability of the dosage, the remaining product which is not used immediately is inevitably wasted.

Finally, the nutritional compositions available on the market have flavours that are not always pleasant which discourages their consumption on the part of patients.

The Applicant has now surprisingly found an immuno-nutritional composition whose characteristics allow the above drawbacks of the state of the art to be overcome.

The main objective of the present invention is to identify an immuno-nutritional composition for the treatment of lesions, in particular PLs, which is particularly effective and at the same time does not negatively interfere with other pathologies possibly present in the patient.

A second objective of the present invention is to make this immuno-nutritional composition available in such as a form as to allow its ingestion also on the part of patients affected by malabsorption syndrome or dysphagia, for which the ingestion of liquids and food in general, also in modest quantities, is difficult.

A third objective of the present invention is to make this immuno-nutritional composition available in such a form that the administration dosage can be easily varied in relation to the specific demands of each patient.

A further objective of the present invention is to find an immuno-nutritional composition which has a pleasanter taste with respect to the nutritional compositions of the state of the art.

An object of the present invention therefore relates to an immuno-nutritional composition for the prevention and/or treatment of lesions, in particular pressure lesions, consisting of a mixture comprising:
i) maltodextrin in a quantity ranging from 20% to 50% by weight with respect to the total weight of the mixture,
ii) arginine in a quantity varying from 10% to 40% by weight with respect to the total weight of the mixture,
iii) omega-3 polyunsaturated fatty acids in a quantity varying from 5% to 30% by weight with respect to the total weight of the mixture,
iv) collagen in a quantity varying from 0.5% to 5% by weight with respect to the total weight of the mixture,
v) vitamins in a quantity varying from 0.1% to 5% by weight with respect to the total weight of the mixture,
vi) zinc in a quantity varying from 0.01% to 1.0% by weight with respect to the total weight of the mixture.

A second object of the present invention relates to the process for the preparation of an immuno-nutritional composition for the prevention and/or treatment of lesions, in particular pressure lesions, comprising mixing the following ingredients in powder form:
i) maltodextrin in a quantity ranging from 20% to 50% by weight with respect to the total weight of the mixture,
ii) arginine in a quantity varying from 10% to 40% by weight with respect to the total weight of the mixture,
iii) omega-3 polyunsaturated fatty acids in a quantity varying from 5% to 30% by weight with respect to the total weight of the mixture,
iv) collagen in a quantity varying from 0.5% to 5% by weight with respect to the total weight of the mixture,
v) vitamins in a quantity varying from 0.1% to 5% by weight with respect to the total weight of the mixture,
vi) zinc in a quantity varying from 0.01% to 1.0% by weight with respect to the total weight of the mixture.

Another object of the present invention relates to the use of said immuno-nutritional composition as a nutritional and immunological support in patients affected by lesions, in particular PLs.

A further object of the present invention relates to the immuno-nutritional composition for use as a medicine, in particular for preventing and promoting the healing of lesions, in particular PLs.

Yet another object of the present invention relates to the use of the immuno-nutritional composition for the preparation of a medicine for the treatment of lesions, in particular pressure lesions.

The immuno-nutritional composition according to the present invention contains maltodextrin in a quantity ranging from 20% to 50% by weight with respect to the total weight of the mixture, preferably from 25% to 40%, even more preferably from 32% to 37%.

The immuno-nutritional composition according to the present invention also contains arginine in a quantity ranging from 10% to 40% by weight with respect to the total weight of the mixture, preferably from 15% to 30%, even more preferably from 22% to 27%.

A second fundamental component of the immuno-nutritional composition according to the present invention is collagen, present in a quantity ranging from 0.5% to 5% by weight with respect to the total weight of the mixture, preferably from 0.8% to 4%, even more preferably from 1.0% to 3%.

The immuno-nutritional composition according to the present invention also contains components with a high energy content such as polyunsaturated fatty acids of the omega-3 type. The quantity of omega-3 fatty acids in the immuno-nutritional composition varies from 5% to 30% by weight with respect to the total weight of the mixture, preferably from 15% to 25%, even more preferably from 18% to 22%.

The immuno-nutritional composition according to the present invention also contains vitamins. The vitamins used are preferably vitamins E, B1, B6, B12, A, K, K1 and C. The overall quantity of vitamins present in the mixtures varies from 0.1% to 5% by weight with respect to the total weight of the mixture, preferably from 0.9% to 4%, even more preferably from 1.2% to 3%.

In a preferred composition, the percentage ratio between the different vitamins varies approximately within the following ranges:

| | |
|---|---|
| Vitamin C | 85 - 96% |
| Vitamin E | 3.0 - 7.5% |
| Vitamin A | 0.1 - 3.0% |
| Vitamin B6 | 0.3 - 0.5% |
| Vitamin B1 | 0.15 - 0.35% |
| Vitamin K | 0.01 - 0.30% |
| Vitamin B12 | <0.01% |

(percentages referring to the overall weight of all the vitamins).

The immuno-nutritional composition according to the present invention also contains zinc in a quantity which varies from 0.01% to 1.0% by weight with respect to the total weight of the mixture, preferably from 0.04% to 0.5%, even more preferably from 0.1% to 0.3%.

For the purposes of the preparation of the immuno-nutritional composition according to the present invention, the vitamins can be used either pure or as "equivalent" compounds, i.e. compounds which, once ingested, are capable of giving an equivalent supply of the component considered. Vitamin E, for example, can also be present as an equivalent" compound such as tocopherol and its salts; equivalent compounds of vitamin B6 are pyridoxine and its salts, equivalent compounds of vitamin B1 are thiamine or its salts, equivalent compounds of vitamin B12 are cyanocobalamine and its salts, whereas those of vitamin A are, for example, retinol, salts of retinyl and carotene. The equivalent compounds which can be used in the immuno-nutritional composition according to the present invention are all compounds which are suitable for the preparation of food products.

The immuno-nutritional composition according to the present invention can also optionally contain ribonucleic acid (RNA) in a quantity which varies from 1% to 10% by weight with respect to the total weight of the mixture, preferably from 3% to 9%, even more preferably from 6% to 8%.

The immuno-nutritional composition can optionally comprise additives (for example aromatizers, dyes, etc.) typically used in the field of food preparations and well-known to experts in the field.

The immuno-nutritional composition according to the present invention can generally be prepared in any form suitable for its ingestion. The immuno-nutritional composition object of the present invention is preferably prepared in the form of a powder or granular product starting from its components in the solid state. In a second preferred embodiment the immuno-nutritional composition according to the present invention is in the form of an aqueous emulsion.

The administration mode of the immuno-nutritional composition according to the present invention is preferably oral. The immuno-nutritional composition in powder-form, for example, can be mixed with other food without altering its taste in any way. The immuno-nutritional composition according to the present invention in liquid form, on the other hand, can be ingested as a normal drink.

The immuno-nutritional composition can be packaged in various ways. For the powder or granule form, single-dose sachets are preferably used.

The immuno-nutritional composition according to the present invention in liquid form is obtained by dispersion of the solid mixture and addition of aspartame, emulsifying agents and optionally acidity regulators. The emulsifying agents are those typically used in products for food use, such as, for example, soya lecithin.

The immuno-nutritional composition object of the present invention can be taken in varying doses according to the demands of each individual. The preferred dose varies from 5 to 8 g of solid product to be ingested up to 4 times/day.

In order to obtain an effective action in the treatment of lesions, in particular PLs, the immuno-nutritional composition according to the present invention is taken as an integration of the supply of proteins and carbohydrates via normal nourishment, this supply being essential for the healing of lesions.

The immuno-nutritional composition according to the invention can be conveniently taken by the patient also for preventive purposes, for example before surgical treatment and/or hospitalization.

The immuno-nutritional composition object of the present invention has proved to be effective in the prevention and treatment of lesions, in particular PLs: with analogous other contributory causes, in fact, the ingestion of this composition allows the appearance of said lesions to be delayed and/or it accelerates their healing.

It also has numerous advantages with respect to the immuno-nutritional compositions available in the state of the art.

A first advantage of the immuno-nutritional composition according to the invention lies in that, thanks to the particular mixture of which it consists, it can be used as an immuno-nutritional composition for the prevention and/or treatment of lesions also in patients affected by other pathologies, at the same time avoiding the undesired effects which accompany the use of the compositions of the state of the art. In particular, the low calory and carbohydrate content allows the composition to be used also in the case of obese patients or patients suffering from diabetes.

A second advantage of the immuno-nutritional composition according to the invention lies in the possibility of modulating the dosage in relation to the specific demands of each patient and possible additional pathologies the patient is suffering from. In particular, the supply of nutritional and immunological substances can be guaranteed regardless of the more or less high quantities of proteins, carbohydrates and glucides that can be administered to each individual in relation to other possible pathologies (e.g. diabetes, obesity, nephropathies).

The possibility of easily modulating the dosage also allows product waste, unlike what is currently the case with the immuno-nutritional compositions according to the state of the art.

A further advantage with respect to the immuno-nutritional compositions of the state of the art is represented by a much pleasanter taste which makes them more agreeable for the patient.

The immuno-nutritional composition according to the present invention, with the addition of suitable pharmaceutically acceptable excipients and/or coadjuvants, can also be used as a drug. In particular, the use of the immuno-nutritional composition is described in the present patent application for the preparation of a medicine for the prevention and/or treatment of lesions, in particular PLs. This medicine can be prepared in a form suitable for its oral, enteral and injectable administration.

The advantages of the use of the formulation object of the present invention will appear more evident from the following application examples.

### Example 1

An immuno-nutritional composition (Composition A) according to the present invention was prepared in the form of a mixture in powder-form suitable for packaging in single-dose sachets. An 8000 mg single-dose sachet contains:

| INGREDIENT | WEIGHT (mg) |
|---|---|
| Maltodextrin | 2,840 |
| L-arginine | 2,000 |
| Collagen type II | 100 |
| Omega-3 fatty acids | 2,083 |
| L-ascorbic acid (Vit. C) | 100 |
| Vitamin E acetate | 8 |
| Retinol acetate (Vit. A 500,000 UI/g)) | 0.3 |
| Pyridoxine hydrochloride (Vit. B6) | 0.486 |
| Thiamine hydrochloride (Vit. B1) | 0.322 |
| Cyanocobalamine (Vit. B12) | 0.0005 |
| Vitamin K1 5% | 0.3 |
| Zinc citrate tribasic 3H₂O | 12.9 |
| Additives | 855 |

### Example 2

A second immuno-nutritional composition also containing RNA (Composition B) was prepared in the form of a mixture in powder-form suitable for packaging in single-dose sachets. An 8000 mg single-dose sachet contains:

| INGREDIENT | WEIGHT (mg) |
|---|---|
| Maltodextrin | 2,500 |
| L-arginine | 2,000 |
| Collagen type II | 100 |
| Omega-3 fatty acids | 1,900 |
| L-ascorbic acid (Vit. C) | 100 |
| Vitamin E acetate | 8 |
| Retinol acetate (Vit. A 500,000 UI/g)) | 0.3 |
| Pyridoxine hydrochloride (Vit. B6) | 0.486 |
| Thiamine hydrochloride (Vit. B1) | 0.322 |
| Cyanocobalamine (Vit. B12) | 0.0005 |
| Vitamin K1 5% | 0.3 |
| Zinc citrate tribasic 3H₂O | 12.9 |
| RNA | 625 |
| Additives | 753 |

### Example 3

A third immuno-nutritional composition (Composition C) was prepared in the form of a mixture in powder-form suitable for packaging in single-dose sachets. A 5,500 mg single-dose sachet contains:

| INGREDIENT | WEIGHT (mg) |
|---|---|
| Maltodextrin | 2,500 |
| Omega-3 fatty acids | 500 |
| L-arginine | 2,000 |
| L-ascorbic acid (Vit. C) | 100 |
| Collagen type II | 100 |
| Zinc citrate tribasic 3H₂O | 4 |
| Vitamin E acetate | 4 |
| Retinol acetate (Vit. A 500,000 UI/g)) | 0.300 |
| Pyridoxine hydrochloride (Vit. B6) | 0.400 |
| Thiamine hydrochloride (Vit. B1) | 0.250 |
| Cyanocobalamine (Vit. B12) | 0.0005 |
| Vitamin K1 5% | 0.015 |
| Additives | 291 |

The compositions A-C were tested on patients suffering from PLs, either in the form of a drink or in powder form, mixed with food.

In the preparation of drinks, the compositions A-C showed an optimum solubility in 100 ml of water and a good solubility in 80 ml of water.

The compositions A-C proved to be effective in healing lesions, regardless of the administration mode (drinks or powder).

## Claims

1. An immuno-nutritional composition for the prevention and/or treatment of lesions, in particular pressure lesions, consisting of a mixture comprising:
i) maltodextrin in a quantity ranging from 20% to 50% by weight with respect to the total weight of the mixture,
ii) arginine in a quantity varying from 10% to 40% by weight with respect to the total weight of the mixture,
iii) omega-3 polyunsaturated fatty acids in a quantity varying from 5% to 30% by weight with respect to the total weight of the mixture,
iv) collagen in a quantity varying from 0.5% to 5% by weight with respect to the total weight of the mixture,
v) vitamins in a quantity varying from 0.1% to 5% by weight with respect to the total weight of the mixture,
vi) zinc in a quantity varying from 0.01% to 1.0% by weight with respect to the total weight of the mixture.

2. The immuno-nutritional composition according to claim 1, **characterized in that** component i) is present in a quantity varying from 25% to 40% by weight with respect to the total weight of the mixture, even more preferably from 32% to 37%.

3. The immuno-nutritional composition according to any of the previous claims, **characterized in that** component ii) is present in a quantity varying from 15% to 30% by weight with respect to the total weight of the mixture, even more preferably from 22% to 27%.

4. The immuno-nutritional composition according to any of the previous claims, **characterized in that** component iii) is present in a quantity varying from 15% to 25% by weight, even more preferably from 18% to 22%.

5. The immuno-nutritional composition according to any of the previous claims, **characterized in that** component iv) is present in a quantity varying from 0.8% to 4% by weight with respect to the total weight of the mixture, even more preferably from 1.0% to 3%.

6. The immuno-nutritional composition according to any of the previous claims, **characterized in that** component v) is present in a quantity varying from 0.9% to 4% by weight with respect to the total weight of the mixture, even more preferably from 1.2% to 3%.

7. The immuno-nutritional composition according to any of the previous claims, **characterized in that** component vi) is present in a quantity varying from 0.04% to 0.5% by weight with respect to the total weight of the mixture, even more preferably from 0.1% to 0.3%.

8. The immuno-nutritional composition according to any of the previous claims, **characterized in that** component v) is from vitamins E, B1, B6, B12, A, K, K1 and C and/or mixtures thereof.

9. The immuno-nutritional composition according to any of the previous claims, **characterized in that** component v) can be pure or in the form of an equivalent compound.

10. The immuno-nutritional composition according to any of the previous claims, **characterized in that** it also comprises ribonucleic acid (RNA) in a quantity varying from 1% to 10% by weight with respect to the total weight of the mixture, preferably from 3% to 9%, even more preferably from 6% to 8%.

11. The immuno-nutritional composition according to any of the previous claims, **characterized in that** it also comprises aromatizing additives and/or dyes.

12. The immuno-nutritional composition according to any of the previous claims, **characterized in that** it is prepared in doses each comprising (quantities expressed in mg)
| | |
|---|---|
| Maltodextrin | 2,840 |
| L-arginine | 2,000 |
| Collagen type II | 100 |
| Omega-3 fatty acids | 2,083 |
| L-ascorbic acid (Vit. C) | 100 |
| Vitamin E acetate | 8 |
| Retinol acetate (Vit. A 500,000 UI/g)) | 0.3 |
| Pyridoxine hydrochloride (Vit. B6) | 0.486 |
| Thiamine hydrochloride(Vit. B1) | 0.322 |
| Cyanocobalamine (Vit. B12) | 0.0005 |
| Vitamin K1 5% | 0.3 |
| Zinc citrate tribasic 3H₂O | 12.9 |
| Additives | 855 |

13. The immuno-nutritional composition according to any of the claims from 1 to 12, **characterized in that** it is prepared in the form of an aqueous emulsion.

14. A process for the preparation of an immuno-nutritional composition for the prevention and/or treatment of lesions, in particular pressure lesions, comprising the mixing of the following ingredients in powder-form:
i) maltodextrin in a quantity ranging from 20% to 50% by weight with respect to the total weight of the mixture,
ii) arginine in a quantity varying from 10% to 40% by weight with respect to the total weight of the mixture,
iii) omega-3 polyunsaturated fatty acids in a quantity varying from 5% to 30% by weight with respect to the total weight of the mixture,
iv) collagen in a quantity varying from 0.5% to 5% by weight with respect to the total weight of the mixture,
v) vitamins in a quantity varying from 0.1% to 5% by weight with respect to the total weight of the mixture,
vi) zinc in a quantity varying from 0.01% to 1.0% by weight with respect to the total weight of the mixture.

15. Immuno-nutritional composition according to any of the previous claims 1-13 for use as a nutritional and immunological support in patients suffering from lesions, wounds or ulcers, in particular pressure lesions.

16. The immuno-nutritional composition for the prevention and/or treatment of lesions, in particular pressure lesions, according to any of the claims from 1 to 13, comprising pharmaceutically acceptable excipients and/or coadjuvants, for use as a medicine.

17. Use of the immuno-nutritional composition according to any of the previous claims, comprising pharmaceutically acceptable excipients and/or coadjuvants, for the preparation of a medicine for the prevention and/or treatment of lesions, in particular PLs.

## Patentansprüche

1. Immunmodulierende Nahrungszusammensetzung zur Prävention und/oder Behandlung von Läsionen, insbesondere von Druckläsionen, welche aus einer Mischung besteht, welche enthält:
i) Maltodextrin in einer Menge in einem Bereich zwischen 20 und 50 Gew.-% bezogen auf das Gesamtgewicht der Mischung,
ii) Arginin in einer Menge in einem Bereich zwischen 10 und 40 Gew.-% bezogen auf das Gesamtgewicht der Mischung,
iii) polyungesättigte omega-3-Fettsäuren in einer Menge in einem Bereich zwischen 5 und 30 Gew.-% bezogen auf das Gesamtgewicht der Mischung,
iv) Kollagen in einer Menge in einem Bereich zwischen 0,5 und 5 Gew.-% bezogen auf das Gesamtgewicht der Mischung,
v) Vitamine in einer Menge in einem Bereich zwischen 0, 1 und 5 Gew.-% bezogen auf das Gesamtgewicht der Mischung,
vi) Zink in einer Menge in einem Bereich zwischen 0,01 und 1,0 Gew.-% bezogen auf das Gesamtgewicht der Mischung.

2. Immunmodulierende Nahrungszusammensetzung nach Anspruch 1, **dadurch gekennzeichnet, dass** der Bestandteil i) in einer Menge in einem Bereich zwischen 25 und 40 Gew.-% bezogen auf das Gesamtgewicht der Mischung und besonders bevorzugt in einer Menge zwischen 32 und 37 Gew.-% vorliegt.

3. Immunmodulierende Nahrungszusammensetzung nach einem der vorhergehenden Ansprüche, **dadurch gekennzeichnet, dass** der Bestandteil ii) in einer Menge in einem Bereich zwischen 15 und 30 Gew.-% und besonders bevorzugt in einem Bereich zwischen 22 und 27 Gew.-% bezogen auf das Gesamtgewicht der Mischung vorliegt.

4. Immunmodulierende Nahrungszusammensetzung nach einem der vorhergehenden Ansprüche, **dadurch gekennzeichnet, dass** der Bestandteil iii) in einer Menge in einem Bereich zwischen 15 und 25 Gew.-% und besonders bevorzugt in einem Bereich zwischen 18 und 22 Gew.-% vorliegt.

5. Immunmodulierende Nahrungszusammensetzung nach einem der vorhergehenden Ansprüche, **dadurch gekennzeichnet, dass** der Bestandteil iv) in einer Menge in einem Bereich zwischen 0,8 und 4 Gew.-% und besonders bevorzugt zwischen 1,0 und 3 Gew.-% bezogen auf das Gesamtgewicht der Mischung vorliegt.

6. Immunmodulierende Nahrungszusammensetzung nach einem der vorhergehenden Ansprüche, **dadurch gekennzeichnet, dass** der Bestandteil v) in einer Menge in einem Bereich zwischen 0,9 und 4 Gew.-% und besonders bevorzugt zwischen 1,2 und 3 Gew.-% bezogen auf das Gesamtgewicht der Mischung vorliegt.

7. Immunmodulierende Nahrungszusammensetzung nach einem der vorhergehenden Ansprüche, **dadurch gekennzeichnet, dass** der Bestandteil vi) in einer Menge in einem Bereich zwischen 0,04 und 0,5 Gew.-% und besonders bevorzugt zwischen 0,1 und 0,3 Gew.-% bezogen auf das Gesamtgewicht der Mischung vorliegt.

8. Immunmodulierende Nahrungszusammensetzung nach einem der vorhergehenden Ansprüche, **dadurch gekennzeichnet, dass** der Bestandteil v) aus Vitaminen E, B1, B6, B12, A, K, K1 und C und/oder Mischungen hiervon zusammengesetzt ist.

9. Immunmodulierende Nahrungszusammensetzung nach einem der vorhergehenden Ansprüche, **dadurch gekennzeichnet, dass** der Bestandteil v) rein oder in der Form einer äquivalenten Verbindung vorliegen kann.

10. Immunmodulierende Nahrungszusammensetzung nach einem der vorhergehenden Ansprüche, **dadurch gekennzeichnet, dass** diese auch Ribonukleinsäure (RNS) in einer Menge in einem Bereich zwischen 1 und 10 Gew.-%, bevorzugt zwischen 3 und 9 Gew.-% und besonders bevorzugt zwischen 6 und 8 Gew.-% bezogen auf das Gesamtgewicht der Mischung enthält.

11. Immunmodulierende Nahrungszusammensetzung nach einem der vorhergehenden Ansprüche, **dadurch gekennzeichnet, dass** diese auch aromatisierende Additive und/oder Farbstoffe enthält.

12. Immunmodulierende Nahrungszusammensetzung nach einem der vorhergehenden Ansprüche, **dadurch gekennzeichnet, dass** diese in Dosen hergestellt wird, von denen jede enthält (Mengen in mg ausgedrückt)
| | |
|---|---|
| Maltodextrin | 2.840 |
| L-Arginin | 2.000 |
| Kollagen-Typ II | 100 |
| Omega-3-Fettsäuren | 2.083 |
| L-Ascorbinsäure (Vitamin C) | 100 |
| Vitamin-E-Acetat | 8 |
| Retinolacetat (Vitamin A 500.000 UI/g) | 0,3 |
| Pyridoxinhydrochlorid (Vitamin B6) | 0,486 |
| Thiaminhydrochlorid (Bitamin B1) | 0,322 |
| Cyanocobalamin (Vitamin B12) | 0,0005 |
| Vitamin K1 5 % | 0,3 |
| Zinkeitrat-tribasisch 3 H₂O | 12,9 |
| Additive | 855 |

13. Immunmodulierende Nahrungszusammensetzung nach einem der Ansprüche 1 bis 12, **dadurch gekennzeichnet, dass** diese in der Form einer wässrigen Lösung hergestellt wird.

14. Verfahren zur Herstellung einer immunmodulierenden Nahrungszusammensetzung zur Prävention und/oder Behandlung von Läsionen, insbesondere von Druckläsionen, welche eine Mischung mit den nachfolgenden Nachteilen in Pulverform enthält:
i) Maltodextrin in einer Menge in einem Bereich zwischen 20 und 50 Gew.-% bezogen auf das Gesamtgewicht der Mischung,
ii) Arginin in einer Menge zwischen 10 und 40 Gew.-% bezogen auf das Gesamtgewicht der Mischung,
iii) polyungesättigte omega-3-Fettsäuren in einer Menge in einem Bereich zwischen 5 und 30 Gew.-% bezogen auf das Gesamtgewicht der Mischung,
iv) Kollagen in einer Menge zwischen 0,5 und 5 Gew.-% bezogen auf das Gesamtgewicht der Mischung,
v) Vitamine in einer Menge in einem Bereich zwischen 0,1 und 5 Gew.-% bezogen auf das Gesamtgewicht der Mischung,
vi) Zink in einer Menge in einem Bereich zwischen 0,01 und 1 Gew.-% bezogen auf das Gesamtgewicht der Mischung.

15. Immunmodulierende Nahrungszusammensetzung nach einem der vorhergehenden Ansprüche 1 bis 13 zur Verwendung als Nährstoff- und immunologischen Träger in Patienten, welche an Läsionen, Wunden oder Geschwüren, insbesondere an Druckläsionen, leiden.

16. Immunmodulierende Nahrungszusammensetzung zur Prävention und/oder Behandlung von Läsionen, insbesondere von Druckläsionen, nach einem der Ansprüche 1 bis 13, welche pharmazeutisch akzeptable Hilfsstoffe und/oder Koadjuvantien enthält, zur Verwendung als Arzneimittel.

17. Verwendung einer immunmodulierenden Nahrungszusammensetzung nach einem der vorhergehenden Ansprüche, welche pharmazeutisch akzeptable Hilfsstoffe und/oder Koadjuvantien enthält, zur Herstellung eines Arzneimittels zur Prävention und/oder Behandlung von Läsionen, insbesondere von Druckläsionen.

## Revendications

1. Composition immuno-nutritionnelle conçue pour la prévention et/ou le traitement de lésions, et en particulier d'escarres, constituée d'un mélange comprenant :
i) de la maltodextrine, en une quantité représentant de 20 à 50 % du poids total du mélange ;
ii) de l'arginine, en une quantité représentant de 10 à 40 % du poids total du mélange ;
iii) des acides gras polyinsaturés oméga-3, en une quantité représentant de 5 à 30 % du poids total du mélange ;
iv) du collagène, en une quantité représentant de 0,5 à 5 % du poids total du mélange ;
v) des vitamines, en une quantité représentant de 0,1 à 5 % du poids total du mélange ;
vi) et du zinc, en une quantité représentant de 0,01 à 1,0 % du poids total du mélange.

2. Composition immuno-nutritionnelle conforme à la revendication 1, **caractérisée en ce que** le composant (i) s'y trouve en une quantité représentant de 25 à 40 %, ou mieux encore de 32 à 37 %, du poids total du mélange.

3. Composition immuno-nutritionnelle conforme à l'une des revendications précédentes, **caractérisée en ce que** le composant (ii) s'y trouve en une quantité représentant de 15 à 30 %, ou mieux encore de 22 à 27 %, du poids total du mélange.

4. Composition immuno-nutritionnelle conforme à l'une des revendications précédentes, **caractérisée en ce que** le composant (iii) s'y trouve en une quantité représentant de 15 à 25 %, ou mieux encore de 18 à 22 %, du poids total du mélange.

5. Composition immuno-nutritionnelle conforme à l'une des revendications précédentes, **caractérisée en ce que** le composant (iv) s'y trouve en une quantité représentant de 0,8 à 4 %, ou mieux encore de 1,0 à 3 %, du poids total du mélange.

6. Composition immuno-nutritionnelle conforme à l'une des revendications précédentes, **caractérisée en ce que** le composant (v) s'y trouve en une quantité représentant de 0,9 à 4 %, ou mieux encore de 1,2 à 3 %, du poids total du mélange.

7. Composition immuno-nutritionnelle conforme à l'une des revendications précédentes, **caractérisée en ce que** le composant (vi) s'y trouve en une quantité représentant de 0,04 à 0,5 %, ou mieux encore de 0,1 à 0,3 %, du poids total du mélange.

8. Composition immuno-nutritionnelle conforme à l'une des revendications précédentes, **caractérisée en ce que** le composant (v) est l'une des vitamines E, B1, B6, B12, A, K, K1 et C, ou un mélange de ces vitamines.

9. Composition immuno-nutritionnelle conforme à l'une des revendications précédentes, **caractérisée en ce que** le composant (v) peut s'y trouver à l'état pur ou sous la forme d'un composé équivalent.

10. Composition immuno-nutritionnelle conforme à l'une des revendications précédentes, **caractérisée en ce qu'**elle contient aussi de l'acide ribonucléique (ARN) en une quantité représentant de 1 à 10 %, de préférence de 3 à 9 %, ou mieux encore de 6 à 8 %, du poids total du mélange.

11. Composition immuno-nutritionnelle conforme à l'une des revendications précédentes, **caractérisée en ce qu'**elle contient en outre des additifs aromatisants et/ou des colorants.

12. Composition immuno-nutritionnelle conforme à l'une des revendications précédentes, **caractérisée en ce qu'**elle se présente en doses dont chacune contient, en milligrammes :
| | |
|---|---|
| Maltodextrine | 2,840 |
| L-arginine | 2,000 |
| Collagène de type II | 100 |
| Acides gras oméga-3 | 2,083 |
| Acide L-ascorbique (vitamine C) | 100 |
| Acétate de vitamine E | 8 |
| Acétate de rétinol (vitamine A, 500 000 UI/g) | 0,3 |
| Chlorhydrate de pyridoxine (vitamine B6) | 0,486 |
| Chlorhydrate de thiamine (vitamine B1) | 0,322 |
| Cyanocobalamine (vitamine B12) | 0,0005 |
| Vitamine K1 (5%) | 0,3 |
| Citrate tribasique de zinc tris-hydraté | 12,9 |
| Adjuvants | 855 |

13. Composition immuno-nutritionnelle conforme à l'une des revendications 1 à 12, **caractérisée en ce qu'**elle est préparée sous la forme d'une émulsion aqueuse.

14. Procédé de préparation d'une composition immuno-nutritionnelle conçue pour la prévention et/ou le traitement de lésions, et en particulier d'escarres, lequel procédé comporte le fait de mélanger les ingrédients suivants, pris à l'état de poudre :
i) de la maltodextrine, en une quantité représentant de 20 à 50 % du poids total du mélange ;
ii) de l'arginine, en une quantité représentant de 10 à 40 % du poids total du mélange ;
iii) des acides gras polyinsaturés oméga-3, en une quantité représentant de 5 à 30 % du poids total du mélange ;
iv) du collagène, en une quantité représentant de 0,5 à 5 % du poids total du mélange ;
v) des vitamines, en une quantité représentant de 0,1 à 5 % du poids total du mélange ;
vi) et du zinc, en une quantité représentant de 0,01 à 1,0 % du poids total du mélange.

15. Composition immuno-nutritionnelle conforme à l'une des revendications 1 à 13 précédentes, pour son utilisation en tant que soutien nutritionnel et immunologique apporté à des patients souffrant de lésions, de plaies ou d'ulcères, et en particulier d'escarres.

16. Composition immuno-nutritionnelle conçue pour la prévention et/ou le traitement de lésions, et en particulier d'escarres, conforme à l'une des revendications 1 à 13, comprenant des excipients et/ou coadjuvants pharmacologiquement admissibles, pour son utilisation en tant que médicament.

17. Utilisation d'une composition immuna-nutritionttelle conforme à l'une des revendications précédentes, comprenant des excipients et/ou coadjuvants pharmacologiquement admissibles, en vue de la préparation d'un médicament conçu pour la prévention et/ou le traitement de lésions, et en particulier d'escarres.
